# EUROPÄISCHE PATENTANMELDUNG

(11) **EP 4 071 372 A1**
(43) Veröffentlichungstag der Anmeldung: **12.10.2022**
(21) Anmeldenummer: 21167041.9
(22) Anmeldetag: 06.04.2021
(51) Int. Cl.: F16B 31/02

(54) **BAUGRUPPE MIT BEFESTIGUNGSGEWINDE UND ANSCHLUSSSYSTEM FÜR ELEKTRISCHE VERBRAUCHER**

(71) Anmelder: Arfaoui, Faisel, 5445 Eggenwil (CH)
(72) Erfinder: Arfaoui, Faisel, 5445 Eggenwil (CH)
(74) Vertreter: Dittmann, Rolf

(57) **Zusammenfassung**

Beschrieben ist eine Baugruppe (10), umfassend eine Komponente (11, 13, 14) und ein Gewindeelement. An dem Gewindeelement ist ein Befestigungsgewinde (12) angeordnet. Das Gewindeelement ist um die Achse des Befestigungsgewindes drehbar an der Komponente gelagert,
wobei zwischen der Komponente und dem Gewindeelement eine drehmomentbetätigte Kupplung (17) zur Übertragung eines Drehmoments zwischen der Komponente und dem Gewindeelement angeordnet ist. Dadurch ist das zwischen der Komponente und dem Gewindeelement übertragbare Drehmoment zumindest in einer Drehrichtung begrenzt. Das zwischen der Komponente und dem Gewindeelement in Losschraubrichtung des Befestigungsgewindes übertragbare Drehmoment ist grösser als das in Festschraubrichtung des Befestigungsgewindes übertragbare Drehmoment.

## Beschreibung

### TECHNISCHES GEBIET

Die vorliegende Beschreibung betrifft eine Baugruppe mit Befestigungsgewinde und ein Anschlusssystem für elektrische Verbraucher der in den Ansprüchen beschriebenen Art.

### TECHNOLOGISCHER HINTERGRUND

Es ist in vielen Anwendungsgebieten wünschenswert, zwei Komponenten, Baugruppen oder dergleichen mit möglichst einfach durchzuführenden Montageschritten lösbar miteinander zu verbinden. Dies ist beispielsweise zu realisieren, wenn die miteinander zu verbindenden Einheiten jeweils ein Befestigungsgewinde aufweisen, wobei die Befestigungsgewinde zueinander komplementär sind. Im Rahmen der vorliegenden Beschreibung ist dies so zu verstehen, dass die konvexen Gewindegänge eines Aussengewindes die in die konkaven Gewindegänge eines Innengewindes passen und diese insbesondere ausfüllen und umgekehrt, so, dass diese ineinander eingeschraubt werden können. Die Einheiten können dann einfach aufeinander aufgeschraubt werden, ohne neben den Einheiten weitere Komponenten wie Schrauben, Muttern und dergleichen bereithalten und handhaben zu müssen. Dabei kann auch vorgesehen sein, dass die Montage der Einheiten aneinander ohne die Verwendung von Werkzeugen von Hand erfolgen soll, wobei die aneinander zu montierenden Einheiten beispielsweise gar keine Ansätze für Werkzeuge aufweisen. Allerdings muss vermieden werden, dass die Befestigungsgewinde in Festschraubrichtung überdreht und beschädigt werden. Dies ist insbesondere dann der Fall, wenn eine zu befestigende Montageeinheit aufgrund ihrer Geometrie einen grossen Hebel für den Festschraubvorgang zur Verfügung stellt oder eines der Befestigungsgewinde eine vergleichsweise geringe Festigkeit aufweist, sei es aufgrund des verwendeten Werkstoffs oder aufgrund der Geometrie, weil beispielsweise eines der Befestigungsgewinde hohl und mit einer dünnen Wand ausgeführt ist. Wenn eine Montagegruppe von Hand eingeschraubt werden soll, kann das aufzubringende Anzugsmoment nicht definiert begrenzt werden, wie es beispielweise mit einem Drehmomentschlüssel der Fall wäre. Ebenso kann, selbst wenn ein maximales Anzugsmoment vorgegeben ist, die Einhaltung dieser Angaben oder die Verwendung eines Drehmomentschlüssels nicht immer vorausgesetzt werden, insbesondere dann, wenn vorgesehen ist, dass die Montage auch durch Laien erfolgen soll.

US 2013/0303000 zeigt einen Verbindungsmechanismus, bei dem zwei Komponenten durch magnetisch aktuierbare Verriegelungsstifte miteinander gekoppelt werden. In einem dort gezeigten Ausführungsbeispiel sind an Stirnflächen der Komponenten weiterhin Magnete angeordnet, welche zusätzlich zu der mechanischen Verriegelung durch die Verriegelungsstifte die Komponenten aneinander befestigen. Aus Platzgründen sind die Magnete und die Stifte in Umfangsrichtung alternierend angeordnet, und daher sind die möglichen relativen Umfangsorientierungen der Komponenten relativ zueinander vergleichsweise grob abgestuft.

### DARSTELLUNG DES GEGENSTANDES DER VORLIEGENDEN BESCHREIBUNG

Im Rahmen der vorliegenden Beschreibung sind eine Baugruppe und ein Anschlusssystem für elektrische Verbraucher der eingangs beschriebenen Art angegeben. Die Baugruppe soll ein sicheres und einfaches Befestigen einer Komponente an einem Gegenstück ermöglichen. Gemäss einem Aspekt der vorliegend beschriebenen Gegenstände sollen die oben beschriebenen Nachteile des Standes der Technik vermieden werden. In einer spezifischeren Sichtweise soll es die Baugruppe ermöglichen, dass eine Komponente durch einen Laien schnell und sicher befestigt werden kann. Dabei soll auch ein Überdrehen des Befestigungsgewindes, welches mit einer Beschädigung verbunden ist, vermieden werden. Gemäss einem weiteren Aspekt soll es ermöglicht sein, die Komponente in einer Umfangsrichtung in möglichst vielen Positionen zu orientieren. Es soll weiterhin ermöglicht sein, das einmal angeschraubte Befestigungsgewinde sicher wieder lösen zu können.

Dies wird mittels der im Anspruch 1 beschriebenen Vorrichtung erreicht.

Weitere Wirkungen und Vorteile der hier beschriebenen Gegenstände, ob explizit angegeben oder nicht, ergeben sich im Lichte der vorliegenden Beschreibung.

Vorgeschlagen ist demnach eine Baugruppe, die eine Komponente sowie ein Gewindeelement umfasst, an dem ein Befestigungsgewinde angeordnet ist. Es ist dabei vorgesehen, dass die Komponente mittels des Gewindeelements mit dem Befestigungsgewinde an einem entsprechenden Gegenstück befestigbar ist. Es erschliesst sich in diesem Zusammenhang vollkommen zwanglos, dass im Zusammenhang mit der Offenbarung der im Anspruch 1 beschriebenen Baugruppe, sowie aller in den Unteransprüchen wie auch in der Beschreibung beschriebenen spezielleren Ausführungsformen und Weiterbildungen der Baugruppe, auch ein Montage- oder Befestigungssystem offenbart ist, welches die genannte Baugruppe sowie eine zweite Komponente umfasst, wobei die zweite Komponente ein Befestigungsgewinde umfasst bzw. an der zweiten Komponente ein Befestigungsgewinde angeordnet ist, welches mit dem Befestigungsgewinde der Baugruppe kompatibel ist. Dergestalt passen das Befestigungsgewinde der Baugruppe und das Befestigungsgewinde der zweiten Komponente zusammen und sind miteinander kompatibel, derart, dass das Befestigungsgewinde der Baugruppe und das Befestigungsgewinde der zweiten Komponente miteinander verschraubt werden können, wodurch die Baugruppe und die zweite Komponente aneinander befestigt werden. Das Gewindeelement der Baugruppe ist um die Achse des Befestigungsgewindes drehbar an der Komponente gelagert. Zwischen der Komponente und dem Gewindeelement ist eine drehmomentbetätigte Kupplung zur Übertragung eines Drehmoments zwischen der zu montierenden Komponente und dem Gewindeelement angeordnet. Damit ist das zwischen der zu montierenden Komponente und dem Gewindeelement übertragbare Drehmoment zumindest in eine Drehrichtung begrenzt. Dabei ist die Kupplung so ausgeführt, dass zwischen der Komponente und dem Gewindeelement in Losschraubrichtung, d.h. beim Losschrauben, des Befestigungsgewindes übertragbare Drehmoment grösser ist als das in Festschraubrichtung, d.h. beim Festschrauben, des Befestigungsgewindes übertragbare Drehmoment. Die Festschraubrichtung und Losschraubrichtung sind dabei als die Drehrichtungen zu verstehen, in denen das Drehmoment beim Festschrauben bzw. Losschrauben des Befestigungsgewindes übertragen wird. Hierbei ist auf eine bestimmungsgemässe Verwendung des Befestigungsgewindes zum Befestigen der Baugruppe an einem Gegenstück abzustellen. Dadurch, dass das übertragbare Drehmoment in Losschraubrichtung grösser ist als in Festschraubrichtung, wird sichergestellt, dass das einmal eingeschraubte Befestigungsgewinde auch wieder gelöst werden kann. Es kann vorgesehen sein, dass die drehmomentbetätigte Kupplung in Losschraubrichtung gar nicht auslöst, so, dass das in Losschraubrichtung übertragbare Drehmoment nicht begrenzt ist bzw. nur durch die Festigkeit der kraftübertragenden Komponenten der Kupplung begrenzt ist. Es versteht sich von selbst, dass, bei bestimmungsgemässer Verwendung, in Losschraubrichtung eine Gefahr einer Überlastung des Befestigungsgewindes praktisch ausgeschlossen ist, es sei denn, das Befestigungsgewinde habe sich in seinem Gegenstück festgefressen. Das maximal in Festschraubrichtung übertragbare Drehmoment wird insbesondere durch den Fachmann derart festgelegt, dass eine Beschädigung des Befestigungsgewindes durch Überdrehen vermieden wird, andererseits aber eine ausreichend feste Verschraubung erzielt werden kann. Damit kann die Baugruppe von einem Laien an der Komponente gehalten und das Befestigungsgewinde mit einem zum Befestigungsgewinde komplementären Gewinde verschraubt und mit einem definierten Anzugmoment festgezogen werden, wobei eine Beschädigung der zusammenwirkenden Gewinde durch zu festes Anziehen vermieden wird. Gleichzeitig ist, wie oben erwähnt, ebenfalls gewährleistet, dass die Verbindung wieder gelöst werden kann.

"Ein" oder "eine" sind im Rahmen der vorliegenden Beschreibung als unbestimmte Artikel und nicht als Zahlwort zu verstehen, sofern nicht explizit auf eine andere Bedeutung, beispielsweise durch die Verwendung von "genau ein" oder "genau eine" hingewiesen wird.

Die Kupplung ist insbesondere eine formschlüssige Kupplung. In spezifischen Ausführungsformen ist die Kupplung eine Klinkenkupplung. Diese weist zwei Kupplungselemente auf, zwischen denen das Drehmoment übertragen wird, und welche ein erstes komponentenfestes Kupplungselement umfassen, das relativ zu der Komponente um die Achse des Befestigungsgewindes drehfixiert ist und weiterhin ein zweites gewindefestes Kupplungselement, das relativ zum Gewindeelement um die Achse des Befestigungsgewindes drehfixiert ist. Eines der genannten Kupplungselemente umfasst eine Verzahnung mit in Umfangsrichtung angeordneten Zähnen, während an dem anderen der Kupplungselemente eine Klinke angeordnet ist, welche zwischen die Zähne der Verzahnung eingreift, und die derart elastisch gelagert ist, dass sie durch Auflaufen auf eine Zahnflanke über einen Zahn der Verzahnung bewegbar ist und durch eine elastische Rückstellkraft wieder in Eingriff mit der Verzahnung versetzbar ist. Dementsprechend wird das Drehmoment durch eine Umfangskraft zwischen einer Zahnflanke des einen Kupplungselements und einer daran anliegenden Flanke der Klinke übertragen. In Abhängigkeit von einem Winkel, den die Zahnflanke und/oder die anliegende Flanke der Klinke mit der Umfangsrichtung aufweisen, induziert die Umfangskraft ebenfalls eine auf die Klinke wirkende Radial- und/oder Axialkraft. Diese wirkt gegen die elastische Rückstellkraft der Klinke und drückt die Klinke aus der Verzahnung heraus. Wenn diese Radial- und/oder Axialkraft so gross ist, dass die Klinke über die Höhe eines Zahns der Verzahnung bewegt wird, löst die Kupplung aus. Es erschliesst sich dem Fachmann ohne weiteres, dass die übertragbare Umfangskraft umso grösser ist, je grösser der kleinere derjenigen Winkel ist, welche eine Zahnflanke und die daran anliegende Flanke der Klinke mit der Umfangsrichtung bilden. Das übertragbare Drehmoment ergibt sich selbstverständlich aus der übertragbaren Umfangskraft und dem Abstand des Ortes der Kraftübertragung von der Achse des Befestigungsgewindes. Durch unterschiedliche Gestaltung der Zahnflanken und/oder der Flanken der Klinke in den unterschiedlichen Umfangsorientierungen - zum Beispiel im oder gegen den Uhrzeigersinn - können die unterschiedlichen übertragbaren Drehmomente in den beiden Drehrichtungen eingestellt werden. Dies wird unten noch näher dargestellt.

Es versteht sich von selbst, dass die in Umfangsrichtung angeordnete Verzahnung der Kupplung koaxial mit dem Befestigungsgewinde angeordnet sein soll.

In bestimmten, nicht einschränkenden, Ausführungsformen weist die Kupplung wenigstens eine Ausnehmung auf, durch die ein Gegenstand zum formschlüssigen Überbrücken der Kupplung einführbar ist. So kann beispielsweise das Kupplungselement, an dem die Klinke angeordnet ist, einen radial verlaufenden Schlitz aufweisen, durch den eine Klinge eines Schraubendrehers eingeführt und mit der Verzahnung in Eingriff gebracht werden kann. Dies kann als Notüberbrückung der Kupplung dienen für den Fall, dass beispielsweise die Klinke oder die Zähne der Verzahnung verschleissen oder sonst nicht mehr funktional sind. Durch derart notfallmässiges Überbrücken der Kupplung kann eine einmal angeschraubte Baugruppe auch in einem solchen Fall wieder abgeschraubt werden.

Um die Kupplung mit drehrichtungsabhängigen übertragbaren Drehmomenten bereitzustellen, kann vorgesehen sein, dass die Klinke in Umfangsrichtung eine erste Flanke aufweist, die sich beim Festschrauben des Befestigungsgewindes an einem Zahn der Verzahnung abstützt, wobei diese erste Flanke einen kleineren Winkel mit der Umfangsrichtung der Verzahnung einschliesst als eine dieser in Umfangsrichtung entgegengesetzt angeordnete Flanke der Klinke. Alternativ oder zusätzlich kann vorgesehen sein, dass ein Zahn der Verzahnung in Umfangsrichtung eine erste Flanke aufweist, die sich beim Festschrauben des Befestigungsgewindes an der Klinke abstützt, wobei diese erste Flanke einen kleineren Winkel mit der Umfangsrichtung der Verzahnung einschliesst als eine dieser in Umfangsrichtung entgegengesetzt angeordnete Flanke des Zahns.

In weiteren spezifischen Ausführungsformen ist wenigstens das gewindefeste Kupplungselement der Kupplung relativ zu der Komponente in axialer Richtung des Befestigungsgewindes beweglich und zum Gewindeeinlauf des Befestigungsgewindes hin elastisch vorgespannt. Dies erleichtert die Handhabung der Baugruppe beim Anschrauben an ein Gegenstück zusätzlich, insbesondere, wenn hierbei noch eine gewisse Verkippung der Achse des Befestigungsgewindes relativ zu der Komponente ermöglicht ist. Auf diese Weise kann sich das Befestigungsgewinde beim Festschrauben in seinem Gegenstück in einem gewissen Rahmen selbst zentrieren und die Gefahr des Verkantens des Gewindes, was zu Beschädigungen des Gewindes bzw. seines Gegenstücks führen kann, wird signifikant reduziert.

In beispielhaften Ausführungsformen ist die Verzahnung am gewindefesten Kupplungselement angeordnet und die Klinke ist am komponentenfesten Kupplungselement angeordnet.

Es kann weiterhin vorgesehen sein, dass das gewindefeste Kupplungselement einstückig mit dem Gewindeelement ausgeführt ist. Dies bedeutet insbesondere, dass das gewindefeste Kupplungselement und das Gewindeelement in einem Urformvorgang in einem Stück ausgebildet sind. Beispielsweise können das gewindefeste Kupplungselement und das Gewindeelement ein einzelnes in einem Spritzgussvorgang hergestelltes Spritzgussbauteil oder ein einzelnes in einem Durchgang durch ein additives Herstellverfahren hergestelltes Bauteil sein. Selbstverständlich sind diese Beispiele nicht abschliessend oder einschränkend zu verstehen.

Die Kupplung kann in beispielhaften, aber nicht einschränkenden, Ausführungsformen derart aufgebaut sein, dass die Kupplungselemente radial ineinander angeordnet sind und die Zähne der Verzahnung sich mit ihrer Zahnhöhe radial erstrecken. In einer derartigen Ausführungsform kann die Klinke insbesondere radial beweglich sein. In spezifischeren beispielhaften Ausführungsformen ist das komponentenfeste Kupplungselement ein Aussenring und das gewindefeste Kupplungselement ist radial innerhalb des Aussenrings angeordnet. In noch spezifischeren beispielhaften Ausführungsformen ist das gewindefeste Kupplungselement ein Innenring, der radial innerhalb des Aussenrings angeordnet ist, wobei weiterhin auf der Innenseite des Innenrings das Befestigungsgewinde als Innengewinde angeordnet ist. Dabei kann auf der Aussenseite des inneren Rings die Verzahnung und auf der Innenseite des Aussenrings die Klinke angeordnet sein.

In anderen nicht einschränkend zu verstehenden Ausführungsformen sind die Kupplungselemente axial hintereinander angeordnet und die Zähne der Verzahnung erstrecken sich mit ihrer Zahnhöhe axial. Hierbei kann insbesondere vorgesehen sein, dass die Klinke axial beweglich ist.

Die Baugruppe ist in spezifischen Aspekten als elektrischer Steckverbinder ausgeführt, der zur Verbindung mit einem anderen elektrischen Steckverbinder und zur Übertragung von Strom und/oder elektrischen Signalen zwischen den beiden Steckverbindern vorgesehen ist. Diese Ausführungsform zeichnet sich in spezifischen Ausführungsformen dadurch aus, dass die Kupplungselemente jeweils eine zentrale axiale Durchgangsöffnung aufweisen und radial innerhalb der Kupplungselemente eine elektrische Anschlusseinheit, insbesondere als Stecker oder Buchse, angeordnet ist.

Weiterhin offenbart ist ein Anschlusssystem für elektrische Verbraucher. Dieses umfasst zwei miteinander koppelbare Steckverbinder, wobei einer der Steckverbinder eine als Stecker ausgebildete elektrische Anschlusseinheit umfasst und der andere Steckverbinder eine als Buchse ausgebildete elektrische Anschlusseinheit umfasst, welche miteinander kompatibel sind, derart, dass die Kontaktelemente des Steckers in die Öffnungen der Buchse einführbar und in Kontakt mit innerhalb der Buchse angeordneten Kontaktelementen bringbar sind. Ein erster der Steckverbinder ist eine Baugruppe gemäss einem der vorstehenden Ansprüche und ein zweiter der Steckverbinder umfasst ein Befestigungsgewinde, das zum Befestigungsgewinde des ersten Steckverbinders komplementär und dementsprechend mit diesem fügbar bzw. verschraubbar ist. Insbesondere weist die Buchse an ihrer Stirnseite konzentrische ringförmige Öffnungen zur Aufnahme der Kontakte des Steckers auf. Innerhalb der Öffnungen sind, vor Berührung geschützt, die Kontakte der Buchse angeordnet. Dies ermöglicht es, die Buchse und den Stecker im zusammengesteckten Zustand relativ zueinander um eine gemeinsame Achse zu drehen, derart, dass die Gewinde der Steckverbinder gefügt und gelöst werden können während die Kontakte des Steckers in die Buchse eingesteckt sind. Die Kontakte des Steckers sind in beispielhaften Ausführungsformen ringförmig ausgeführt und erstrecken sich von einer Stirnseite des Steckers bzw. des entsprechenden Steckverbinders. Es kann weiterhin auch ein zentraler Kontaktstift angeordnet sein. In nicht einschränkenden beispielhaften Ausführungsformen ist einer der Steckverbinder als Installationseinheit ausgeführt und weist eine Rückseite auf, die zur Befestigung beispielsweise an einer Decke oder Wand vorbereitet ist. Hierzu kann beispielsweise an der Rückseite der Installationseinheit eine Platte mit Löchern zur Durchführung von Schrauben angeordnet sein. Das Befestigungsgewinde und die elektrische Anschlusseinheit sind entsprechend an einer gegenüberliegenden Vorderseite der Installationseinheit befestigt. Dabei ist die Buchse an der Installationseinheit und der Stecker dem anderen Steckverbinder angeordnet.

Die oben genannten spezifischen Ausführungsformen können untereinander kombiniert werden. Weitere, nicht spezifisch offenbarte Ausführungsformen der Lehre dieses Dokumentes erschliessen sich dem Fachmann ohne Weiteres.

### KURZE BESCHREIBUNG DER FIGUREN

Die hier dargelegten Sachverhalte werden nachfolgend anhand ausgewählter in der Zeichnung dargestellter Ausführungsbeispiele näher erläutert. Im Einzelnen zeigen
- Fig. 1: ein Anschlusssystem für elektrische Verbraucher, welches zwei Steckverbinder umfasst, die ihrerseits jeweils ein Gewinde aufweisen, mittels derer die Steckverbinder aneinander befestigt werden können;
- Fig. 2: das Anschlusssystem aus Figur 1 in einer Explosionsdarstellung;
- Fig. 3: eine Grundplatte und elektrisches Anschlusselement mit einem Befestigungsgewinde, welches über eine Kupplung mit der Grundplatte und dem elektrischen Anschlusselement verbunden ist;
- Fig. 4: eine Schnittdarstellung aus der Figur 3, bei der der Kraftübertragungs- und Auslösemechanismus der Kupplung sichtbar ist;
- Fig. 5: eine Detaildarstellung des Kraftübertragungs- und Auslösemechanismus aus Figur 4;
- Fig. 6: eine zweite beispielhafte Ausführungsform einer Grundplatte und eines elektrischen Anschlusselements mit einem Befestigungsgewinde, welches über eine Kupplung mit der Grundplatte und dem elektrischen Anschlusselement verbunden ist;
- Fig. 7: eine Schnittdarstellung aus der Figur 6, bei der der Kraftübertragungs- und Auslösemechanismus der Kupplung sichtbar ist;
- Fig. 8: eine Detaildarstellung des Kraftübertragungs- und Auslösemechanismus aus Figur 7;
- Fig. 9: eine detaillierte Explosionsdarstellung der Kupplung aus den Figuren 6 bis 8.

Die Zeichnungen sind stark schematisiert. Nicht für das Verständnis der beschriebenen Gegenstände notwendige Einzelheiten sind weggelassen worden. Weiterhin zeigen die Zeichnungen nur ausgewählte Ausführungsbeispiele und dürfen nicht zur Einschränkung der in den Ansprüchen umschriebenen Gegenstände herangezogen werden. Nicht gezeigte Ausführungsformen können durchaus von den Ansprüchen abgedeckt sein.

### AUSFÜHRUNGSBEISPIELE

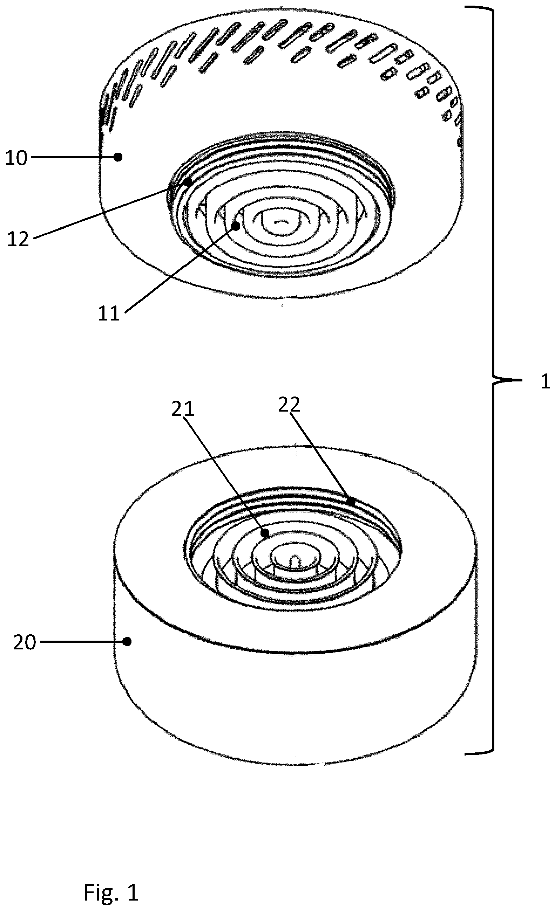

Figur 1 zeigt als Beispiel für zwei aneinander zu montierende Baugruppen bzw. Komponenten ein Anschlusssystem 1 für elektrische Verbraucher. Eine erste Baugruppe 10 der beiden Baugruppen ist mit einer elektrischen Anschlusseinheit 11 in Form einer Buchse ausgeführt, während eine zweite Baugruppe 20 der beiden Baugruppen mit einer elektrischen Anschlusseinheit 21 in Form eines Steckers ausgeführt ist. Dabei sind, vor Berührung geschützt, innerhalb der Buchse 11 elektrische Kontaktelemente angeordnet. Die elektrische Anschlusseinheit 11 weist rotationssymmetrische Öffnungen auf, in welche die ebenfalls rotationssymmetrischen Kontaktelemente des Steckers 21 der zweiten Baugruppe 20 eingeführt werden können, wobei sie innerhalb der Buchse 11 mit den dort angeordneten Kontaktelementen in Berührung kommen. Derart kann zwischen den beiden Baugruppen 10 und 20 Strom fliessen bzw. können elektrische Signale übertragen werden. Es ist weiterhin vorgesehen, dass die beiden Einheiten 10 und 20 auch mechanisch miteinander gekoppelt werden. Hierzu umfasst die Baugruppe 10 ein Aussengewinde 12 und die Einheit 20 ein hierzu komplementäres Innengewinde 22. Die Einheiten 10 und 20 können verwendet werden, um in einer Hausinstallation elektrische Verbraucher anzuschliessen. Da die Kontaktelemente der Baugruppe 10 im Inneren der Buchse 11 angeordnet sind und vor Berührung geschützt sind, sind diese geeignet, permanent unter Spannung zu stehen. Daher ist die Baugruppe 10 mit der Buchse insbesondere als Installationseinheit geeignet, welche fest installiert und mit dem Stromnetz verbunden wird. Die Baugruppe 20 ist hingegen als Verbraucher-Anschlusseinheit geeignet, da in diesem Falle die Kontaktelemente des Steckers 21 nur dann mit einer Spannungsquelle verbunden sind, wenn sie innerhalb der Buchse 11 der Baugruppe 10 zu liegen kommen und entsprechend vor Berührung von aussen geschützt sind. Zum Anschliessen eines elektrischen Verbrauchers werden die Kontaktelemente des Steckers 21 in die Öffnungen der Buchse 11 eingeführt. Beispielsweise ist die Installationseinheit 10 an einer Wand oder Decke befestigt. Die Verbindung kann gesichert werden, indem die Verbraucher-Anschlusseinheit 20 um ihre Achse gedreht wird, derart, dass die Gewinde 12 und 22 miteinander in Eingriff kommen. Die Verbraucher-Anschlusseinheit 20 bietet jedoch einen vergleichsweise grossen Hebel, so, dass vergleichsweise leicht beim Festziehen der Gewinde 12 und 22 selbst von Hand ein Drehmoment aufgebracht werden kann, bei dem die Gewinde beschädigt werden können.

Das Gehäuse der Installationseinheit ist im dargestellten Ausführungsbeispiel durchbrochen, derart, dass Aussenluft in das Gehäuse einströmen kann. Dergestalt ist die Installationseinheit geeignet, beispielsweise auch einen Rauchmelder zu integrieren. Es können auch andere funktionale Komponenten innerhalb der Installationseinheit angeordnet sein.

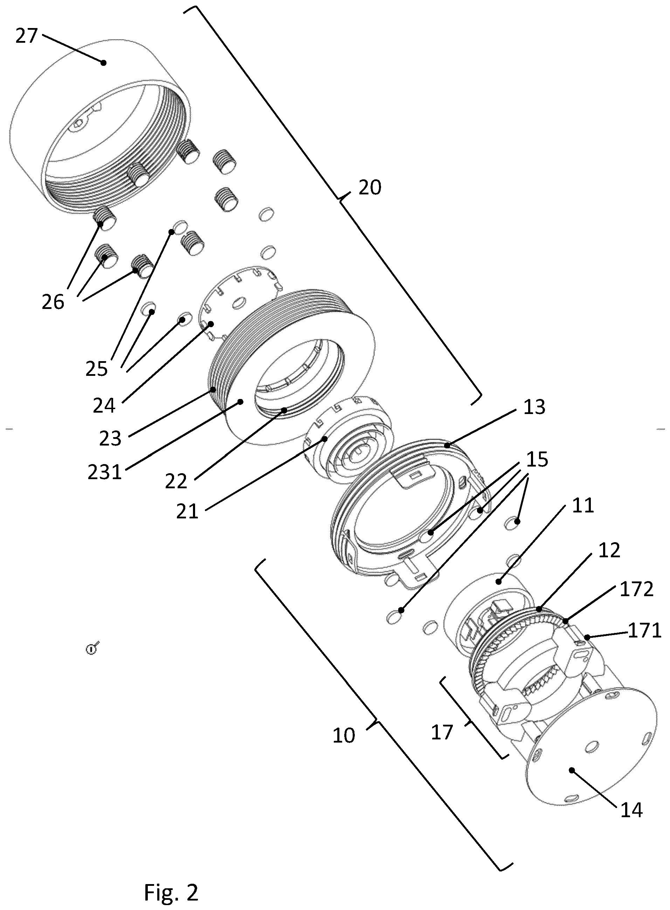

Die Figur 2 zeigt das Anschlusssystem in einer Explosionszeichnung, wobei das Gehäuse der Installationseinheit weggelassen wurde. Die Verbraucher-Anschlusseinheit 20 umfasst den Stecker 21, der mit einer Gegenplatte 24 in einem Träger 23 fixiert ist. Benachbart zu einer Stirnseite des Trägers 23 ist das Innengewinde 22 angeordnet. Der Träger 23 weist weiterhin ein Aussengewinde auf, auf das ein Deckel 27 aufschraubbar ist. Weiterhin umfasst die Verbraucher-Anschlusseinheit eine Anzahl magnetischer oder magnetisierbarer Magnetelemente 25, welche mittels Madenschrauben 26 innerhalb des Trägers 23 benachbart zur vorderen Stirnfläche 231 des Trägers fixiert werden können. Ebenso könnten die Magnetelemente 25 auch durch Kleben oder eine andere geeignete Befestigung auf der Rückseite der Stirnfläche 231 des Trägers 23 fixiert werden. Die Installationseinheit 10 umfasst ebenfalls einen Träger 13 mit einem Aussengewinde, auf das ein nicht dargestelltes Gehäuse der Installationseinheit aufschraubbar ist, durch welches die Buchse 11 der Installationseinheit hindurchragt. Die Installationseinheit 10 umfasst ebenfalls eine Anzahl von Magneten oder magnetisierbaren Magnetelementen 15, welche auf der Rückseite der Stirnfläche des Trägers 13 angeordnet sind. Die Anzahl der Magnetelemente 25 in der Verbraucher-Anschlusseinheit und der Magnetelemente 15 in der Installationseinheit ist bevorzugt identisch, und weiterhin sind die Magnetelemente jeweils bevorzugt gleichmässig am Umfang verteilt. Die Magnetelemente sind jeweils so gewählt bzw. gepolt, dass es wenigstens eine Umfangsorientierung von Installationseinheit und Verbraucher-Anschlusseinheit relativ zueinander gibt, bei denen sich gegenüberliegende Magnetelemente der Installationseinheit und der Verbraucher-Anschlusseinheit gegenseitig anziehen. Derart ist eine Vorfixierung von Installationseinheit und Verbraucher-Anschlusseinheit durch einfaches Anlegen der jeweiligen Stirnflächen aneinander möglich. Im Rahmen der vorliegend beschriebenen Gegenstände sind die Magnetelemente aber nicht notwendig, da die Fixierung der beiden Baugruppen aneinander auch einzig über die komplementären Gewinde 12 und 22 erfolgen kann. Die Magnetelemente 15 und 25 sind vorliegend also als optional zu verstehen. Die Installationseinheit umfasst weiterhin eine drehmomentbetätigte Kupplung 17, über die ein Drehmoment zwischen dem Gewinde 12 und den weiteren Bestandteilen der Installationseinheit übertragen werden kann. Beispielsweise muss beim Aufschrauben der Verbraucher-Anschlusseinheit das zum Aufschrauben und Festziehen der Verbraucher-Anschlusseinheit erforderliche Drehmoment gegen die beispielsweise an einer Decke befestigte Installationseinheit abgestützt werden. Dabei begrenzt die drehmomentbetätigte Kupplung das in Festschraubrichtung übertragbare Drehmoment derart, dass eine Beschädigung der Gewinde 12, 22 vermieden wird. Die Festschraubrichtung bezieht sich auf die Drehrichtung, in welche die Baugruppen 10 und 20 mittels den Gewinden 12 und 22 miteinander verschraubt werden. Die drehmomentbetätigte Kupplung 17 umfasst ein erstes, komponentenfestes Kupplungselement 171, welches über eine Grundplatte 14 fest mit dem Träger 13 und dem nicht dargestellten Gehäuse der Installationseinheit verbunden ist. Weiterhin umfasst die drehmomentbetätigte Kupplung 17 ein zweites, gewindefestes Kupplungselement 172, welches im vorliegenden Ausführungsbeispiel mit dem Gewinde 12 einstückig ausgeführt ist. Das gewindefeste Kupplungselement umfasst eine Verzahnung, deren Zähne in Umfangsrichtung angeordnet sind und mit ihrer Zahnhöhe in axiale Richtung weisen. Die Buchse 11 kann beispielsweise an dem komponentenfesten Kupplungselement 171 oder direkt an der Grundplatte 14 befestigt sein. Das gewindefeste Kupplungselement 172 ist grundlegend ringförmig ausgeführt, wobei die Buchse 11 axial durch die zentrale Öffnung des gewindefesten Kupplungselementes hindurchgeführt ist.

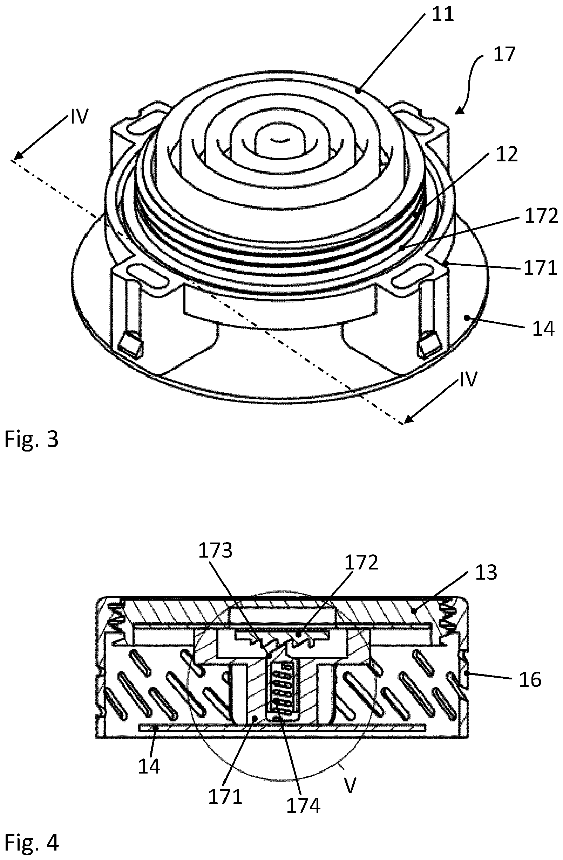

Figur 3 zeigt eine Zusammenbauansicht der drehmomentgesteuerten Kupplung 17 mit der Buchse 11. Wie ersichtlich, ist das komponentenfeste Kupplungselement 171 mit der Grundplatte 14 verbunden. Die Buchse11 ist ihrerseits innerhalb des gewindefesten Kupplungselementes 172 mit dem Befestigungsgewinde 12 angeordnet und ist mit dem komponentenfesten Kupplungselement 171 und damit indirekt mit der Grundplatte 14 fest verbunden.

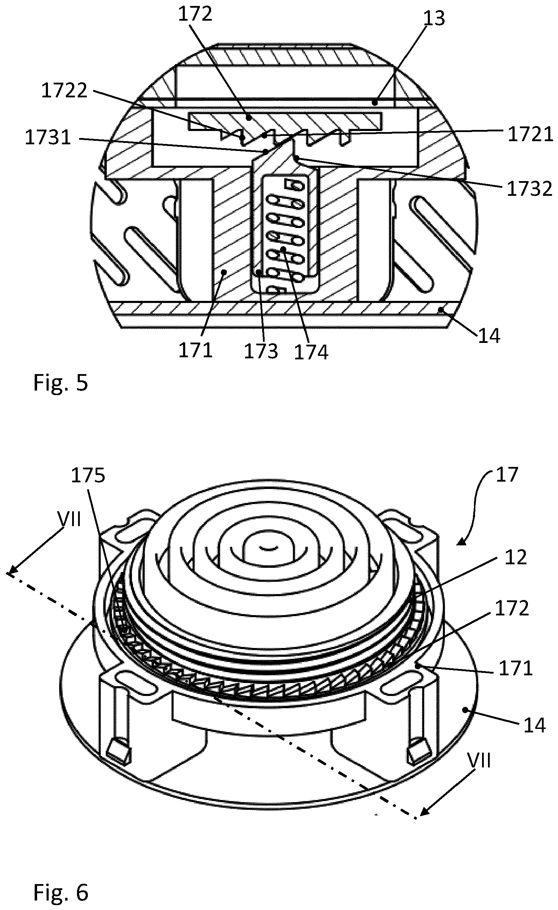

Figur 4 zeigt einen Schnitt entlang der in Figur 3 mit IV-IV gekennzeichneten Linie, wobei das Gehäuse 16 der Installationseinheit ebenfalls dargestellt ist. In einer Ausnehmung des komponentenfesten Kupplungselements 171 ist eine Klinke 173 angeordnet, die durch eine Feder 174 axial gegen die Verzahnung des gewindefesten Kupplungselements vorgespannt ist und in diese Verzahnung eingreift. An ihrem hinteren Ende stützt sich die Feder 174 gegen das komponentenfeste Kupplungselement ab. Ein distales Ende der Klinke 173 ist dabei mit der Verzahnung des gewindefesten Kupplungselements in Eingriff. Das gewindefeste Kupplungselement 172, die Feder 174 und die Klinke 173 sind dabei zwischen dem komponentenfesten Kupplungselement 171 und dem Träger 13 axial elastisch gelagert. Das Zusammenwirken der Klinke 173 und der Verzahnung des gewindefesten Kupplungselements 172 ist im Zusammenhang mit dem in Figur 5 dargestellten Detail V aus der Figur 4 näher erläutert. Sowohl die Zähne der Verzahnung wie auch das distale Ende der Klinke sind unsymmetrisch ausgeführt. Dabei weist jeder Zahn der Verzahnung am gewindefesten Kupplungselement 172 eine rampenförmige erste Flanke 1721 auf, welche vergleichsweise flach zur Umfangsrichtung des gewindefesten Kupplungselements 172 bzw. des Gewindes 12 gestaltet ist, sowie eine steile zweite Flanke 1722, welche gegenüber der Umfangsrichtung des gewindefesten Kupplungselements steil angestellt ist bzw. einen grösseren Winkel mit dieser Umfangsrichtung einschliesst als die rampenförmige Flanke 1721. Ebenso weist das distale Ende der Klinke 173 eine rampenförmige erste Flanke 1731 auf, welche vergleichsweise flach zur Umfangsrichtung des gewindefesten Kupplungselements 172 bzw. des Gewindes 12 angeordnet ist, sowie eine steile zweite Flanke 1732, welche gegenüber der Umfangsrichtung des gewindefesten Kupplungselements steil angestellt ist bzw. einen grösseren Winkel mit dieser Umfangsrichtung einschliesst als die rampenförmige Flanke 1731. Dabei ist die Klinke 173 derart angeordnet, dass, abhängig von der Richtung eines zwischen dem gewindefesten Kupplungselement und dem komponentenfesten Kupplungselement übertragenen Drehmoments bzw. der hierzu notwendigen Umfangskraft, diese Umfangskraft jeweils zwischen den rampenförmigen Flanken 1721 und 1731 oder den steilen Flanken 1722 und 1732 der Verzahnung am gewindefesten Kupplungselement und der Klinke übertragen wird. Beim Aufbringen eines Drehmoments in einer Richtung, in der die Umfangskraft zwischen den rampenförmigen Flanken 1721 und 1731 übertragen wird, induziert die zu übertragende Umfangskraft eine Axialkraft auf die federbelastete Klinke 173, wodurch die Feder 174 komprimiert und das distale Ende der Klinke sukzessive entlang der rampenförmigen Flanke 1721 in Richtung der Spitze des jeweiligen Zahnes der Verzahnung des gewindefesten Kupplungselements bewegt wird. Ist das über die Kupplung übertragene Drehmoment, und damit die zwischen einem Zahn der Verzahnung am gewindefesten Kupplungselement und der Klinke übertragene Umfangskraft, so gross, dass die resultierende Kompressionskraft, die auf die Feder 174 wirkt, die Feder so weit komprimiert, dass die Spitze der Klinke über die Spitze des Zahnes der Verzahnung gedrückt wird, so wird die Drehmomentübertragung über die Kupplung unterbrochen. Die rampenförmigen Flanken sind in Umfangsrichtung so orientiert, dass die Kraftübertragung zwischen den rampenförmigen Flanken 1721 und 1731 dann erfolgt, wenn das Gewinde ein- bzw. aufgeschraubt und festgezogen wird. Wird hingegen ein Drehmoment in einer Richtung aufgebracht, in der die Umfangskraft zwischen den steilen Flanken 1722 und 1732 übertragen wird, kann ein Drehmoment übertragen werden, das im Wesentlichen durch die mechanische Festigkeit der Zähne des gewindefesten Kupplungselements und der Klinke begrenzt ist. Damit ist das Drehmoment, dass zum Festziehen des Gewindes über die Kupplung 17 aufgebracht bzw. abgestützt werden kann, durch die Kupplung limitiert, wohingegen das Drehmoment, das zum Losschrauben des Gewindes über die Kupplung aufgebracht bzw. abgestützt werden kann, in jedem Falle grösser ist als das maximal mögliche Anzugsmoment. Damit kann sichergestellt werden, dass das Gewinde nicht beim Festziehen überlastet und beschädigt wird, während andererseits sichergestellt ist, dass eine einmal hergestellte Gewindeverbindung wieder lösbar ist.

Es kann vorgesehen sein, dass Mittel angeordnet sind, die es ermöglichen, die Kupplung zu überbrücken bzw. zu blockieren, damit eine einmal hergestellte Gewindeverbindung auch dann wieder lösbar ist, wenn die Klinke 173 und/oder die Verzahnung des gewindefesten Kupplungselementes beschädigt oder verschlissen sind, so, dass sie keine Umfangskraft bzw. kein Drehmoment mehr übertragen können die bzw. das zum Lösen der Gewindeverbindung ausreichend ist. In einer sehr einfachen Ausgestaltung kann eine Öffnung im Gehäuse der Komponente vorgesehen sein, durch die ein Schraubendreher oder ein anderer geeigneter Gegenstand eingeführt werden kann, um die Relativbewegung des gewindefesten Kupplungselements relativ zum komponentenfesten Kupplungselement zu blockieren. Eine andere beispielhafte Ausführungsform, bei der die Mittel zur Notfallblockierung der Kupplung unmittelbar im Steckverbinder integriert sind, ist in den Figuren 6 bis 9 illustriert.

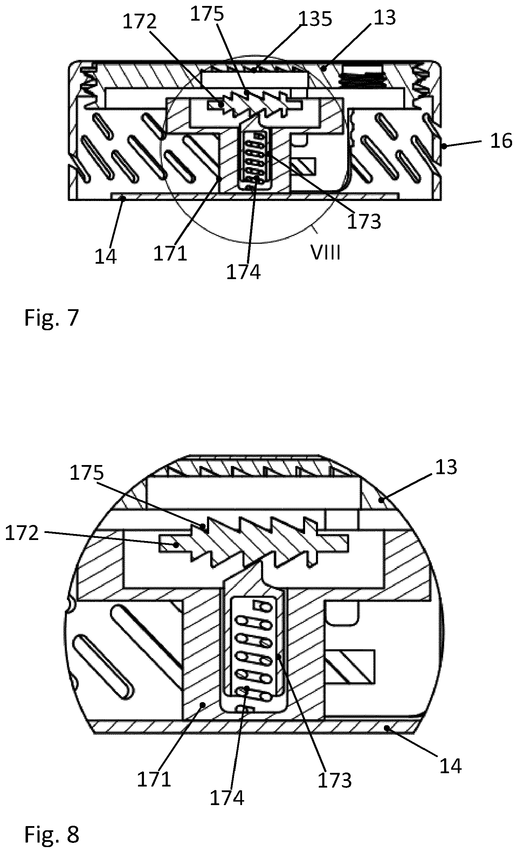

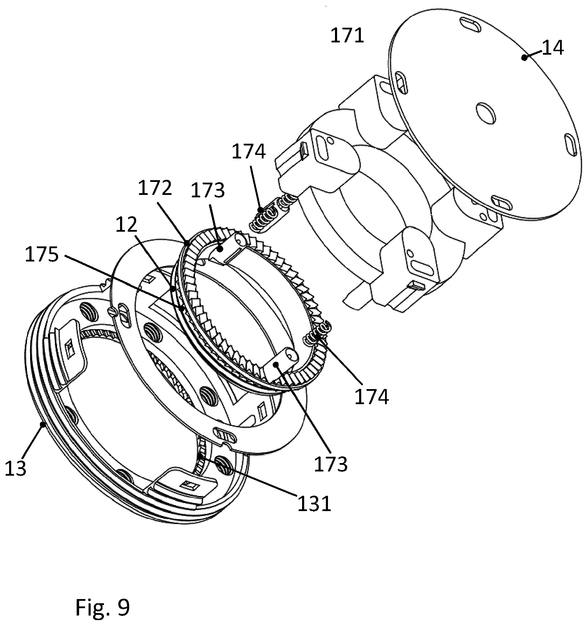

In der Figur 6 ist eine analoge Ansicht zur Figur 3 dargestellt, wobei am gewindefesten Kupplungselement 172 neben der Verzahnung, die mit der Klinke 173 zusammenwirkt, auch eine stirnseitige Verzahnung 175 angeordnet ist, deren Zähne zur Stirnseite des Steckverbinders hin angeordnet sind. In der Figur 7 ist eine Schnittansicht entlang der in Figur 6 mit VII-VII bezeichneten Linie dargestellt. Es ist ersichtlich, dass die stirnseitige Verzahnung 175 ebenfalls in Umfangsrichtung des gewindefesten Kupplungselements unsymmetrische Zähne aufweist. Die flachere Seite der Zähne weist dabei in die gleiche Umfangsrichtung wie bei der Verzahnung, die mit der Klinke 173 zusammenwirkt. Der Träger 13 weist an der Innenseite eine zur stirnseitigen Verzahnung 175 des gewindefesten Kupplungselements 172 komplementäre Verzahnung 135 auf, die sich ebenfalls auf dem gleichen Radius wie die Verzahnung 175 ringförmig erstreckt, derart, dass die stirnseitige Verzahnung 175 des gewindefesten Kupplungselements durch axiale Verschiebung mit der Verzahnung 135 des Trägers in Eingriff versetzen und wieder von dieser lösen lässt. Es ist leicht erkennbar, dass, sofern die Verzahnung 175 in die Verzahnung 135 eingreift, diese die Kupplung in der gleichen Richtung blockiert wie die Klinke im Zusammenwirken mit der rückseitigen Verzahnung des gewindefesten Kupplungselements. Dies ist in der Figur 8 als Detail VIII aus Figur 7 näher dargestellt. Beim Festschrauben des Verbindungsgewindes der Baugruppe an einem Gegenstück wird normalerweise ein von der Stirnseite wegweisender Druck auf das Gewinde und somit auf das gewindefeste Kupplungselement 172 ausgeübt, derart, dass die Verzahnung 175 und die Verzahnung 135 getrennt sind, wie es in den Figuren 7 und 8 dargestellt ist. In dem Falle, dass, aufgrund von Verschleiss oder sonstiger Beschädigungen, zwischen der Klinke und dem gewindefesten Kupplungselement keine Kraft mehr übertragen werden kann, die zum Lösen der Verschraubung der Baugruppe mit einem Gegenstück ausreichend wäre, so kann eine axiale Zugkraft zwischen der Komponente und ihrem Gegenstück, an dem sie mittels des Verbindungsgewindes angeschraubt, aufgebracht werden. Hierdurch kommen die Verzahnungen 175 und 135 in Eingriff miteinander, derart, dass zumindest in der Richtung, in der die steilen Zahnflanken zusammenwirken, die Drehung des gewindefesten Kupplungselements 172 blockiert ist, derart, dass das Lösen der Schraubverbindung ermöglicht ist. In der Figur 9 sind die hierbei zusammenwirkenden Komponenten nochmals in einer Explosionszeichnung dargestellt.

Obschon der Gegenstand der vorliegenden Beschreibung anhand ausgewählter Ausführungsbeispiele erläutert wurde, sollen diese nicht einer Einschränkung der beanspruchten Erfindung dienen. Die Ansprüche umfassen Ausführungsformen, die nicht explizit dargestellt sind, und Ausführungsformen, die von den gezeigten Beispielen abweichen, sind dennoch von den Ansprüchen gedeckt.

## Patentansprüche

1. Baugruppe (10), umfassend eine Komponente (11, 13, 14) und ein Gewindeelement, wobei an dem Gewindeelement ein Befestigungsgewinde (12) angeordnet ist und wobei das Gewindeelement um die Achse des Befestigungsgewindes drehbar an der Komponente gelagert ist,
wobei zwischen der Komponente und dem Gewindeelement eine drehmomentbetätigte Kupplung (17) zur Übertragung eines Drehmoments zwischen der Komponente und dem Gewindeelement angeordnet ist, wodurch das zwischen der Komponente und dem Gewindeelement übertragbare Drehmoment zumindest in einer Drehrichtung begrenzt ist, und wobei das zwischen der Komponente und dem Gewindeelement in Losschraubrichtung des Befestigungsgewindes übertragbare Drehmoment grösser ist als das in Festschraubrichtung des Befestigungsgewindes übertragbare Drehmoment.

2. Baugruppe gemäss dem vorstehenden Anspruch, wobei die Kupplung eine formschlüssige Kupplung ist.

3. Baugruppe gemäss Anspruch 2, wobei die Kupplung eine Klinkenkupplung ist, die zwei Kupplungselemente (171, 172) aufweist, zwischen welchen das Drehmoment übertragen wird, und welche ein erstes komponentenfestes Kupplungselement (171) umfassen, das relativ zu der Komponente um die Achse des Befestigungsgewindes drehfixiert ist und weiterhin ein zweites gewindefestes Kupplungselement (172), das relativ zum Gewindeelement um die Achse des Befestigungsgewindes drehfixiert ist, wobei eines der Kupplungselemente eine Verzahnung mit in Umfangsrichtung angeordneten Zähnen umfasst und an dem anderen der Kupplungselemente eine Klinke (173) angeordnet ist, welche zwischen die Zähne der Verzahnung eingreift, und derart elastisch gelagert ist, dass sie durch Auflaufen auf eine Zahnflanke (1721) über einen Zahn der Umfangsverzahnung bewegbar ist und durch elastische Rückstellkraft wieder in Eingriff mit der Umfangsverzahnung versetzbar ist.

4. Baugruppe gemäss dem vorstehenden Anspruch, wobei die Klinke (173) in Umfangsrichtung eine erste Flanke (1731) aufweist, die sich beim Festschrauben des Befestigungsgewindes an einem Zahn der Verzahnung abstützt, wobei diese erste Flanke einen kleineren Winkel mit der Umfangsrichtung der Verzahnung einschliesst als eine dieser in Umfangsrichtung entgegengesetzt angeordnete Flanke (1732)der Klinke.

5. Baugruppe gemäss einem der beiden vorstehenden Ansprüche, wobei ein Zahn der Verzahnung in Umfangsrichtung eine erste Flanke (1721) aufweist, die sich beim Festschrauben des Befestigungsgewindes an der Sperrklinke (173) abstützt, wobei diese erste Flanke einen kleineren Winkel mit der Umfangsrichtung der Verzahnung einschliesst als eine dieser in Umfangsrichtung entgegengesetzt angeordnete Flanke (1722) des Zahns.

6. Baugruppe gemäss einem der vorstehenden Ansprüche, wobei wenigstens das gewindefeste Kupplungselement (172) der Kupplung (17) relativ zu der Komponente (11, 13, 14) in axialer Richtung des Befestigungsgewindes beweglich ist und zum Gewindeeinlauf des Befestigungsgewindes (12) hin elastisch vorgespannt ist.

7. Baugruppe gemäss einem der Ansprüche 3 bis 6, wobei die Verzahnung am gewindefesten Kupplungselement angeordnet ist und die Klinke am komponentenfesten Kupplungselement angeordnet ist.

8. Baugruppe gemäss einem der Ansprüche 3 bis 7, wobei das gewindefeste Kupplungselement einstückig mit dem Gewindeelement ausgeführt ist.

9. Baugruppe gemäss einem der Ansprüche 3 bis 8, wobei die Kupplungselemente radial ineinander angeordnet sind und die Zähne der Verzahnung sich mit ihrer Zahnhöhe radial erstrecken.

10. Baugruppe gemäss dem vorstehenden Anspruch, wobei das komponentenfeste Kupplungselement ein Aussenring ist und das gewindefeste Kupplungselement ein Innenring ist, der radial innerhalb des Aussenrings angeordnet ist, und wobei weiterhin auf der Innenseite des Innenrings das Befestigungsgewinde als Innengewinde angeordnet ist.

11. Baugruppe gemäss dem vorstehenden Anspruch, wobei auf der Aussenseite des Innenrings die Verzahnung angeordnet ist und auf der Innenseite des Aussenrings die Klinke angeordnet ist.

12. Baugruppe gemäss einem der Ansprüche 3 bis 8, wobei die Kupplungselemente (171, 172) axial hintereinander angeordnet sind und die Zähne der Verzahnung sich mit ihrer Zahnhöhe axial erstrecken.

13. Baugruppe gemäss einem der vorstehenden Ansprüche, wobei die Kupplungselemente (171, 172) jeweils eine zentrale axiale Durchgangsöffnung aufweisen und wobei radial innerhalb der Kupplungselemente eine elektrische Anschlusseinheit (11) angeordnet ist.

14. Anschlusssystem (1) für elektrische Verbraucher, umfassend zwei miteinander koppelbare Steckverbinder, wobei einer der Steckverbinder eine als Stecker ausgebildete elektrische Anschlusseinheit (21) umfasst und der andere Steckverbinder eine als Buchse ausgebildete elektrische Anschlusseinheit (11) umfasst, welche miteinander kompatibel sind, derart, dass die Kontaktelemente des Steckers in die Öffnungen der Buchse einführbar und in Kontakt mit innerhalb der Buchse angeordneten Kontaktelementen bringbar sind, wobei ein erster (10) der Steckverbinder eine Baugruppe gemäss einem der vorstehenden Ansprüche ist und ein zweiter (20) der Steckverbinder ein Befestigungsgewinde (22) umfasst, das zum Befestigungsgewinde (12) des ersten Steckverbinders (10) komplementär und mit diesem fügbar ist.

15. Anschlusssystem gemäss dem vorstehenden Anspruch, wobei einer der Steckverbinder (10) als Installationseinheit ausgeführt ist und eine Rückseite (14) aufweist, die zur Befestigung an einer Decke oder Wand vorbereitet ist, während das Befestigungsgewinde (12) und die elektrische Anschlusseinheit (11) an einer gegenüberliegenden Vorderseite der Installationseinheit befestigt sind, und wobei die Buchse (11) an der Installationseinheit (10) und der Stecker (21) dem anderen der Steckverbinder (20) angeordnet ist.
